Europäisches Patentamt

(19) European Patent Office

Office européen des brevets

(11) **EP 0 930 744 A1**

(12) **EUROPEAN PATENT APPLICATION**

(43) Date of publication:
21.07.1999 Bulletin 1999/29

(51) Int. Cl.$^6$: **H04L 5/02**

(21) Application number: 98100018.5

(22) Date of filing: 02.01.1998

(84) Designated Contracting States:
**AT BE CH DE DK ES FI FR GB GR IE IT LI LU MC NL PT SE**
Designated Extension States:
**AL LT LV MK RO SI**

(71) Applicant: **NewTec CY N.V.**
**2018 Antwerp (BE)**

(72) Inventors:
• **Breynaert, Dirk**
**9100 Sint-Niklaas (BE)**
• **Delaruelle, Daniel**
**9100 Sint-Niklaas (BE)**

(74) Representative:
**Bird, William Edward et al**
**Bird Goen & Co.,**
**Termerestraat 1**
**3020 Winksele (BE)**

(54) **Multiple access method using multicarrier transmission**

(57) The present invention includes a telecommunications system including a plurality of transmitters (20), each transmitter (20) transmitting a modulated signal on one carrier of a set of equally spaced carriers at any one time, said transmitters (20) being co-ordinated by frequency division multiplexing and synchronised to produce an orthogonal frequency division multiplex (OFDM) signal at a receiver (10).

The present invention also includes a method of operating a telecommunication system, comprising the steps of:

transmitting from each transmitter of a plurality of transmitters a modulated data stream on one carrier of a set of equally spaced carriers at any one time, co-ordinating and synchronising the transmissions of the plurality of transmitters so as to produce an orthogonal frequency multiplexed (OFDM) signal at a receiver.

A transmitter (20) is also described for transmitting a modulated data stream on one carrier of a set of equally spaced carriers at any one time, the spacing of said carriers being at the baud rate or a multiple thereof comprising:

a modulator (31) for modulation of a data stream,
a means (31) for sequentially hopping between at least two of said carriers.

The present invention also includes satellite receiver for receiving an orthogonal frequency multiplexed (OFDM) signal including a set of equally spaced carriers, each carrying a modulated data stream, the satellite receiver including a demodulator for demodulating the OFDM signal.

The modulation of the data stream in accordance with the present invention is preferably substantially constant envelope.

FIG. 8

**Description**

The present invention relates to telecommunication, especially satellite telecommunication systems and a method of operating the same as well as a transmitter, e.g. an earth station, and a receiver, e.g. an earth station or a satellite, for use with the telecommunication system. The present invention may provide a multi-user, multi-channel, multi-frequency, spectrally efficient telecommunications system and method of operating the same

BACKGROUND OF THE INVENTION

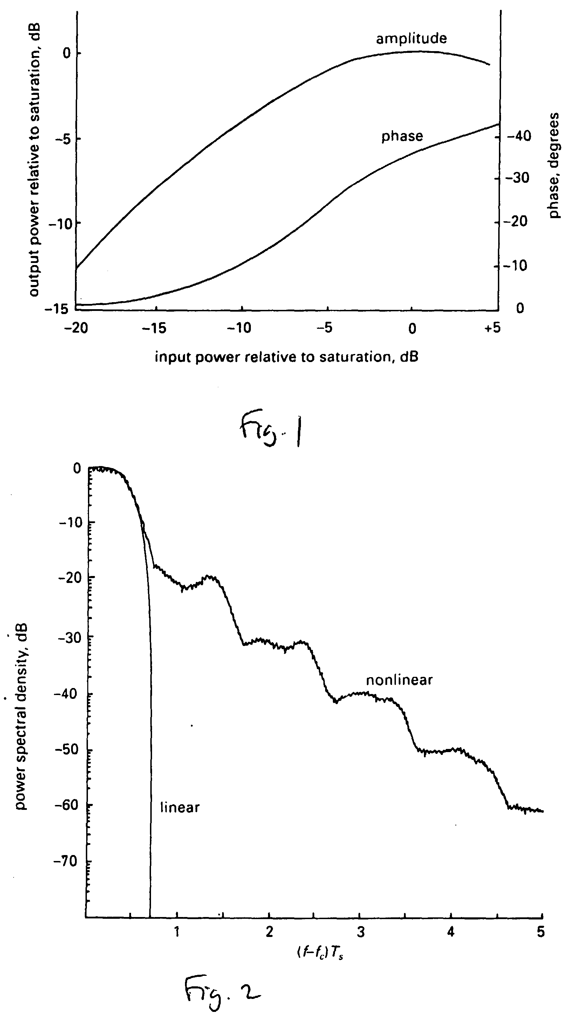

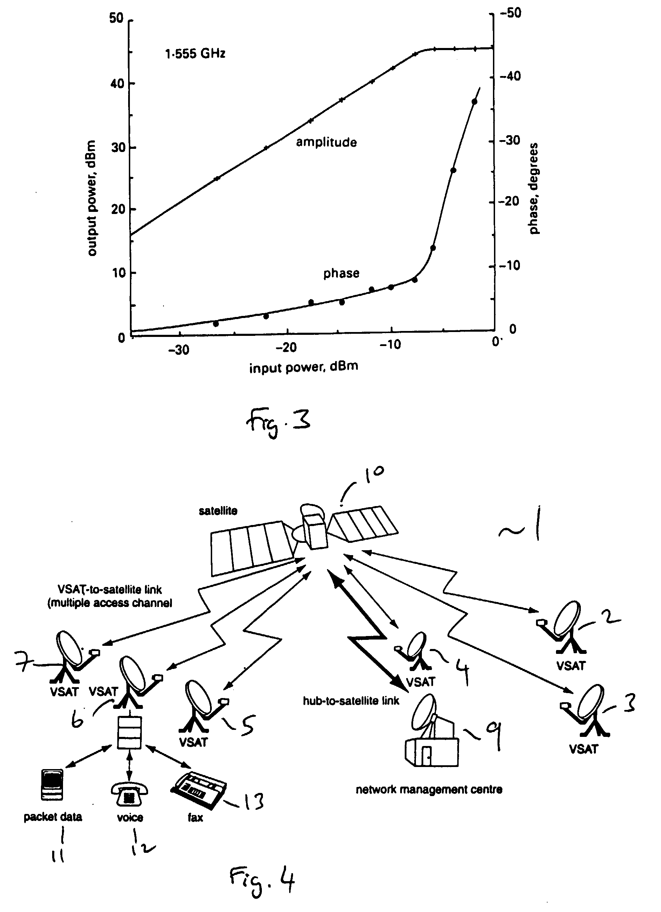

Multimedia personal communications systems including full motion video, voice, fax and other data services should have relatively low cost user equipment. Narrowband ISDN public telephone services are not able to provide the bandwidth and broadband ISDN has not gained acceptance for personal communications. Users are therefore underserved by the existing terrestrial services.
The high power amplifier in a user radio transmitter represents a significant cost. It is generally desirable to operate the power amplifier as efficiently as possible, i.e. close to or at saturation. Travelling wave tube amplifiers (TWTA) satisfy the need for broadband capability, high output power and high DC to RF conversion efficiency. However, operating close to or at saturation introduces two types of distortion, firstly a non-linear relationship between output and input amplitudes, known as the amplitude modulation-to-amplitude modulation (AM-AM) conversion effect, and secondly a dependence of the output phase on the input amplitude, known as the amplitude modulation-to-phase modulation (AM-PM) conversion effect. Fig. 1 shows the phase and amplitude characteristic for a typical TWTA. To reduce the AM-AM and AM-PM conversion effects, the power amplifier may be run in a linear region, e.g. by reducing the maximum power by a certain number of dB, known as output back-off (OBO) which may be achieved by reducing the gain or by reducing the input amplitude, known as input back-off (IBO). However, increasing OBO reduces the efficiency of the amplifier and hence, tolerance to noise and interference. If an amplifier is run at or close to their maximum power, the AM-AM and AM-PM conversion effects have negative effects on the system performance. Firstly the bit error rate (BER) of the system is degraded due to distortion of the amplitude and phase of the signalling elements and due to intersymbol interference (ISI), and secondly the signal is spread spectrally which increases the interchannel interference, particularly for the directly adjacent channels (ACI) in multi-channel systems. The spectral spreading results from regeneration (also known as regrowth) of sidelobes even when the input signal has been bandwidth limited as can be seen from Fig. 2 which compares operating a TWTA in a non-linear region (close to saturation) and in a linear region with a bandlimited QPSK (Quadrature Phase Shift Keyed) signal. In order to reduce the intercharnel interference (ICI) the frequency spacing of the channels is usually kept to at least 1.2 and usually 1.5 times the symbol rate or greater. This results in a spectrally inefficient system.
Solid state amplifiers using silicon bipolar or gallium arsenide (GaAs) MESFET transistors have a different phase and amplitude characteristic of which one example is shown in Fig. 3. Such amplifiers can be operated at 1.6 OBO but this is still a highly undesirable drop in power efficiency especially as the power output from solid state devices is limited anyway.
One approach to solving signal degradation and spectral spreading problems is to try and linearise the output of the amplifier. Feedforward linearisers split the input signal into two parallel paths, one passing through a first amplifier and the other passing through a delay line having a delay equal to that introduced by the first amplifier. All error signal is obtained by comparing the outputs from the first amplifier and the delay line which is fed to a second amplifier to bring its level to a proper value relative to the main amplified signal. The output from the first amplifier is delayed by an amount equal to the delay introduced by the second amplifier and then combined with the output of the second amplifier in an error injection coupler to provide a compensated signal. This method has the major disadvantage of requiring two amplifiers.
Negative feedback linearisers are useful at low-frequencies but have limited use for high frequencies. With so-called "Cartesian feedback", the output of the power amplifier is fed to a demodulator to extract the baseband signal which is then used to compensate the input signal of the modulator.
Predistortion techniques attempt to distort the input signal in such a way that the output in the non-linear region of the amplifier appears linear. The pre-distortion may be applied to the radio frequency (RF), intermediate frequency (IF) or baseband of the input signal. Baseband pre-distortion operates on the data signal before modulation and has the disadvantage that it is highly dependent on the modulation technique used. US 5,579,342 describes a baseband pre-compensation technique.
RF and IF pre-distortion attempt to create a circuit which has more-or-less the inverse characteristic of the power amplifier. RF pre-distortion is currently the preferred method as the power amplifier and the lineariser can be packaged as a single, self-contained unit which is independent of the modulation method used. However, acceptable performance is still limited to an OBO of 0.3 dB at best. Further, linearisers increase the cost of consumer terminals unnecessarily.

The modulation technique used also has a significant effect on spectral efficiency and, interchannel and intersymbol interference. A wide range of modulation techniques have been tested in a variety of radio telecommunications systems having widely different channel characteristics, e.g. mobile telephones, satellite video and television broadcasting, cable modems, optical fibre communication systems. The ideal modulation or keying technique would provide

a) finite bandwidth to limit interchannel (ICI) and particularly adjacent channel interference (ACI) and to improve spectral efficiency,
b) no intersymbol interference,
c) can be used with low-priced hardware, and
d) resistance to fading and multi-path distortion in radio telecommunications systems.

In practice not all of these requirements may be met simultaneously. Generally, requirement a) excludes constant envelope modulation schemes which have an infinite or near-to-infinite bandwidth which increases ACI. Linear modulation techniques require linear processing, e.g. no hard limiting or non-linear operation of amplifiers if sidelobe generation (see Fig. 2) is to be avoided. There are several nearly constant envelope or quasi-linear modulation techniques which may allow the amplifiers some non-linearity but with increasing complexity, the receivers become more complex and ISI may also increase. There therefore, is a requirement, particularly for satellite communications, for a modulation technique which is easy to implement, provides low ACI and ISI, and allows simple and fast receiver designs which can be used on-board.

Orthogonal modulation of multiple carriers (OFDM) from a single high speed serial data stream transmitted as a multiplexed set of low speed data streams modulated onto a set of carriers evenly spaced in frequency throughout the transmission band has been known for a long time for use in modems although it has never been a "mainstream" concept. It has only recently become of interest for radio and television broadcasting since the discrete Fourier transform (DFT) circuitry for the receivers has become readily available and fast. A review of DFT techniques and implementations may be found in the articles by G. M. Blair, Electronics & Communication, vol. 7, number 5, pages 169 to 177, August 1995 and vol. 7, number 5, pages 187 to 194, October 1995. By symbol synchronising the carriers and spacing them in the frequency domain at the symbol rate, orthogonality between the carriers can be obtained which lowers ICI and ACI. Provided a large number of carriers is used, no equalisation of the received signal is necessary. Further, orthogonality between carriers is also the requirement for demodulation using DFT which simplifies the receiver design as explained in the article on digital audio broadcasting by R. Shelswell entitled "The COFDM modulation system: the heart of digital audio broadcasting", Electronics & Communication, vol. 7, number 3, June 1995. Coded orthogonal frequency division multiplexing (COFDM) has also been adopted for the DVB-T standard for the broadcasting of video and television transmissions as explained in the article by U. Reimers, "DVB-T: the COFDM-based system for terrestrial television", Electronics & Communication, vol. 9, number 1, February 1997.

Satellites for telecommunications systems may be grouped into three types: low earth orbit (altitude less than 2000 km), medium earth orbit (altitude between 5000 and 15,000 km) and geostationary orbit (altitude 35,786 km). Few satellites have orbits between 2000 and 9000 km because of the harsh environment of the Van Allen radiation belts which do not disrupt communications at microwave frequencies but can cause damage to on-board sensitive electronic circuitry. Although the present invention is not limited to any particular type of satellite, geostationary satellites are preferred as synchronisation at the receiver may be less difficult.

All object of the present invention is to provide a communications system in which transmitters may be low-price, compact, low weight, and efficient. In particular output amplifiers should be useable in a non-linear region.

It is another object of the present invention to provide a communications system in which may be adapted to different baud rates.

It is a further object of the present invention to provide a satellite communications system with a compact, low weight and simple receiver design for on-board processing which, in particular, does not require narrowband channel filtering to extract the data.

It is still a further object of the present invention to provide a communication system with good spectral efficiency, in particular to provide synchronisation for a plurality of synchronised transmitters which makes efficient use of radio resources.

SUMMARY OF THE INVENTION

The present invention may provide a telecommunications system including a plurality of transmitters, each transmitter transmitting a substantially constant envelope modulated signal on one carrier of a set of equally spaced carriers at any one time, said transmitters being co-ordinated by frequency division multiplexing and synchronised to produce an orthogonal frequency division multiplex (OFDM) signal at a receiver.

The present invention also includes a method of operating a telecommunications system including the steps of: transmitting from each transmitter of a plurality of transmitters a substantially constant envelope modulated data stream on one carrier of a set of equally spaced carriers at any one time, and co-ordinating and synchronising the transmissions of the plurality of transmitters so as to produce an orthogonal frequency multiplexed signal at a receiver. The information content of the data stream from each transmitter is independent of the data streams from the other transmitters.

The present invention also includes a transmitter for transmitting at any one time a modulated data stream on one carrier of a set of equally spaced carriers, the spacing of said carriers being at the baud rate or a multiple thereof comprising: a modulator for substantially constant envelope modulation of a data stream, and means for sequentially hopping between at least two of said carriers. The transmitter preferably includes a means for synchronising transmissions with reference to a common system clock from a broadcast timing signal. The timing signal may be broadcast from a hub of the network, e.g. a network management controller or from a satellite.

The present invention also includes a satellite receiver for receiving an orthogonal frequency multiplexed signal including a set of equally spaced carriers, each carrying a substantially constant envelope modulated data stream, the satellite receiver including a demodulator for demodulating the OFDM signal. The demodulator preferably demodulates the stream from the frequency domain to the time domain directly.

The carriers are preferably spaced at the baud rate. The data streams on the carriers are preferably symbol synchronised, more preferably packet or frame synchronised. Symbol guard gaps may be used but these should be kept to a minimum, e.g. between 9 and 15% of the symbol period. Synchronisation of the transmitters is preferably achieved without a large amount of signalling. It is preferred if the synchronisation is at least at first carried out with respect to a broadcast timing signal, which may be broadcast by a hub of the system.

The present invention differs from conventional OFDM or COFDM as used for instance in television or radio broadcasting in that the individual transmitters only transmit on one carrier frequency of a set of carrier frequencies at any one time and the transmissions from all the transmitters combined together form an OFDM signal at a receiver, whereas in, conventional OFDM or COFDM broadcasting a high speed data signal is modulated onto all the carriers of the set of carrier frequencies and then transmitted.

The dependent claims define separately further embodiments of the present invention. The present invention, its advantages and embodiments will now be described with reference to the following drawings.

BRIEF DESCRIPTION OF THE DRAWINGS

Fig. 1 shows amplitude and phase characteristics of a travelling wave tube amplifier.
Fig. 2 is a comparison between the spectral response of a TWTA when operated with a linear modulation scheme in its linear and non-linear regions.
Fig. 3 shows amplitude and phase characteristics of a solid state amplifier.
Fig. 4 is a schematic representation of a satellite communication system which may be used with the present invention.
Figs. 5 and 6 are schematic representations of satellite communication systems which may be used with the present invention.
Fig. 7 is a diagram showing frequency and time allocations which may be used for the OFDM signal in accordance with the present invention.
Fig. 8 is a schematic representation of a transmitter in accordance with one embodiment of the present invention.
Fig. 9 is an arbitrary time/frequency schedule for use with the present invention.
Fig. 10 is a schematic representation of embodiments of a transmitter and a receiver in accordance with the present invention.
Fig. 11 shows non-linear characteristics of a solid state power amplifier.
Fig. 12 is a representation of the normalised IBO and OBO characteristics of the amplifier of Fig. 11.
Fig. 13 is a representation of the spectral regrowth of a conventional filtered QPSK FDM system when the solid state output amplifier is driven into a non-linear region.
Fig. 14 is a schematic representation of a timing inserter in accordance with another embodiment of the present invention.

DESCRIPTION OF THE ILLUSTRATIVE EMBODIMENTS

The present invention will be described with reference to certain specific embodiments and drawings but the invention is not limited thereto but only by the claims. Further, the present invention will be described with reference to very small aperture terminals (VSAT) which may be described as small (typically 0.75-2.4 m) intelligent satellite earth stations suitable for easy on-premise installation but the invention is not limited thereto but may be applied to satellite communications systems with hand-held, mobile or portable terminals or with fixed earth stations which may concentrate traffic from other telecommunications systems, e.g. local area computer networks (LAN), wide area computer networks (WAN), public telephone or data networks, cellular telephone and data systems, commercial data networks such as Tymnet or Datapak or the Internet, emergency, e.g. police, fire and hospital, services, telephone and data services to ships and aeroplanes or space craft, in particular to telecommunications systems which provide data, voice or video or multimedia communications between individuals. The communications systems may be synchronous or asynchronous e.g. ATM, however the communications interface in accordance with the present invention is synchronous. Further, the present invention is not limited to satellite telecommunication systems but may find general use wherever communications to and from multiple users can be transmitted via multiple carriers at multiple frequencies, e.g. multiplexed cable modem systems, optical fibre communications systems, LAN's or WAN's, particular wave-LAN's and WAN's, public and private radio telecommunication systems including mobile telephone and/or data, particularly cellular telecommunication systems and paging systems.

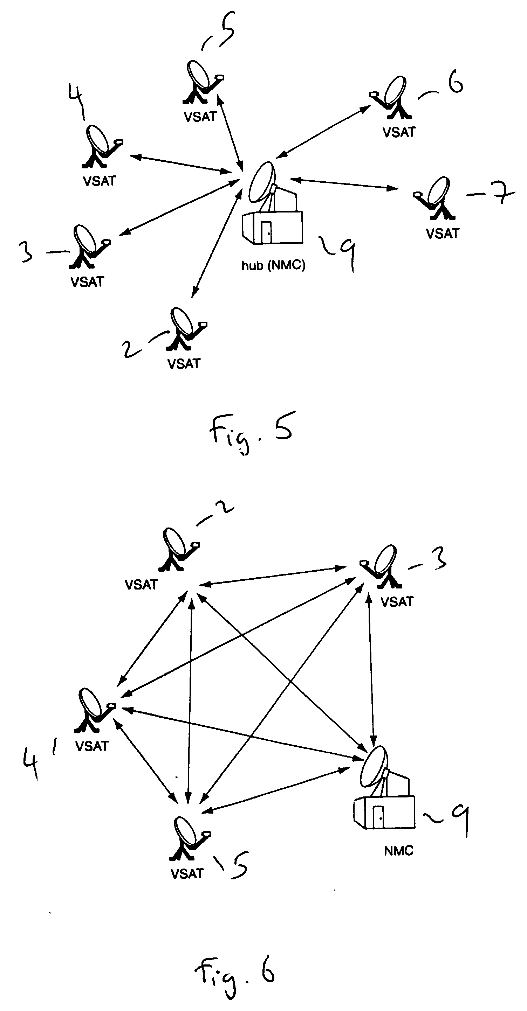

Fig. 4 is a schematic representation of a non-limiting VSAT system 1 to which the present invention may be applied. The system 1 includes a plurality of VSAT's 2-7. Each VSAT 2-7 may be connected to a variety of telecommunications devices such as a computer 11 capable of transmitting and receiving packet data, e.g. communications with the Internet or video, a telephone 12 for transmitting voice messages; a fax machine 13 for transmitting fax data. Each VSAT 2-7 may be communication with at least one satellite 10. To control and organise the telecommunications system 1, a network management centre (NMC) 9 may be provided which may also be in communication with the satellite or satellites 10 and also with the VSAT's 2-7. The NMC 9 may be the hub of a star shaped system as shown schematically in Fig. 5 and may control the system 1 over the radio interface between the NMC 9 and the VSAT's 2-7. Each VSAT 2-7 may communicate with any other VSAT 2-7 only via the satellite 10 and the NMC 9, i.e. each VSAT-VSAT communication involves two round trips via satellite 10. The satellite 10 is transparent to the signals communicated through it. Alternatively, each VSAT 2-7 may be able to communicate directly with any other VSAT 2-7 via satellite 10 as shown schematically in Fig. 6. In this case the satellite 10 forms the hub and requires on-board processing. In such a system the NMC 9 may control the VSAT's 2-7 and system 1 via landlines or other means of communication such as point-to-point microwave links or communicate via the satellite 10 for control of both the VSAT's: 2-7 and the system in general.

In accordance with the present invention the transmissions form the VSAT's 2-7 (and NMC 9 if part of the satellite transmission system) are co-ordinated and synchronised in such a way that the total signal received at the appropriate receiver (either NMC 9 or the satellite 10 depending upon system configuration) forms an orthogonal frequency division multiplexed (OFDM) signal. For example, the data streams in the OFDM signal from a plurality of VSAT's 2-7 may be transmitted in such a way that the data stream on each carrier is symbol synchronised at the appropriate receiver (e.g. satellite 10 or the NMC 9 depending on how the system 1 is organised) with other data streams on the other carriers. It the data on the data streams is organised into packets or frames, it is preferred if all the data streams on all the carriers are packet or frame synchronous. Each transmitting VSAT 2-7 transmits at any one time only on one carrier frequency of a set of equally spaced carrier frequencies 1 to m, each having a frequency $f_0 + n.\Delta f$ where $f_0$ is a base frequency and $\Delta f$ is the frequency difference between adjacent carriers of the OFDM signal and n is an integer between 1 and m. The frequency interval $\Delta f$ in accordance with the present invention may be equal to the symbol (baud) rate or a multiple thereof. Only one VSAT 2-7 may transmit on any one of the carrier frequencies 1 to m (frequency division) at any one time but it may hop sequentially between any of these frequencies. Frequency control on each carrier frequency relative to the same frequency transmitted by another station (relative frequency tolerance) is preferably to within a few percent of the symbol (baud) rate, preferably ±5%, or better, more preferably ± 3% or better, and most preferably ± 2% or better, typically ± 1%. The timing of all the transmitters is preferably synchronised relative to each other to within a few percent of the symbol (baud) period, preferably better than ± 5%, e.g. better than ± 3.5% of the baud period, typically ± 2.5%. Further, the system 1 may include "N" stations 20 whereby "N" will generally be larger than the "m" carriers. The carrier frequencies may be shared among the VSAT's 2-7 by employing a time division multiple access technique (TDMA) however the present invention is not limited thereto.

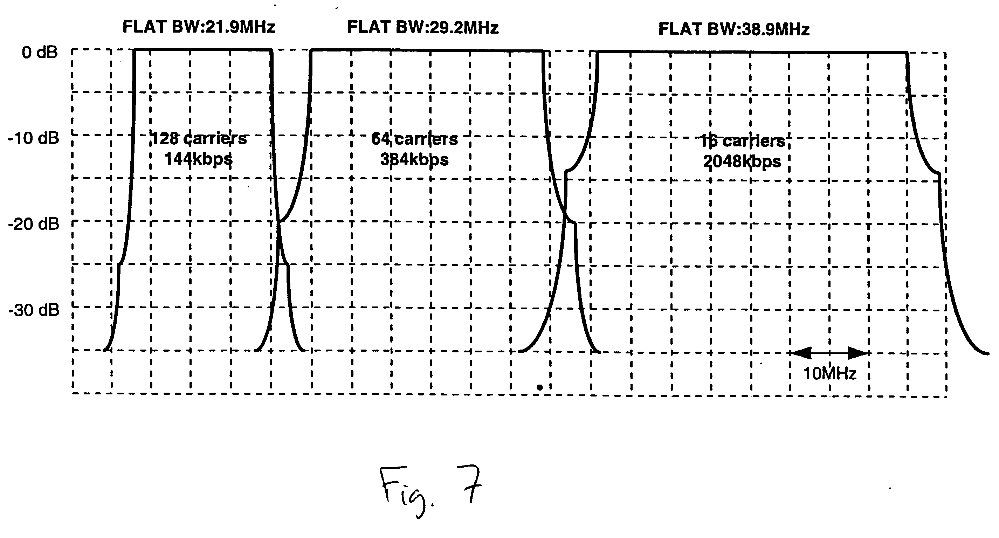

In accordance with the present invention, the total available bandwidth may be divided into subbands depending upon the baud rate of the information to be sent as shown schematically in Fig. 7. For instance two 64 kbps ISDN transmissions for public telephone and data may be transmitted in a first band of 21.9 MHz having 128 equally spaced carriers spaced at 187.5 kbaud, the spacing being determined by the useful transmitted baud rate of 144kbps (the additional bandwidth may be necessary for system control data). On the other hand, it is presently possible to transmit video, e.g. for videoconferencing, at 384kbps using advanced compression techniques. Hence, a second band of 29.2 MHz having 64 carriers spaced at 500 kbaud for a useful transmitted baud rate of 384 kbps may be provided for such data transmissions. For high speed file transfer between computer systems a third band may be provided, e.g. a band of 38.9MHz with 16 carriers having a spacing of 2,666 kbaud for a useful transmitted baud rate of 2048kbps. Using frequency agile modulators in the VSAT's 2-7, each VSAT may select one of the frequencies in one of the bands for its transmissions depending upon the baud rate of the data to be transmitted. Further, the allocation of bandwidth, the number of carriers in the band and the bandwidth may be dynamically altered and the system re-configured by the NMC 9 to meet changing loads and new demands. Where the satellite 10 is the receiver, the transmission from the satellite 10 to a single receiver such as the NMC 9 may be carried out in accordance with the present invention. Alternatively, another system may be used depending upon the on-board processing capabilities. In this patent application the downlink side from the satellite 10 to the VSAT's 2-7 will be called "broadcasting", for instance it may be DVB compatible as described in the article by A. Arcdiacomo, "Multimedia services and data broadcasting via satellite", Electronics & Communication, vol. 9, number 1, February, 1997.

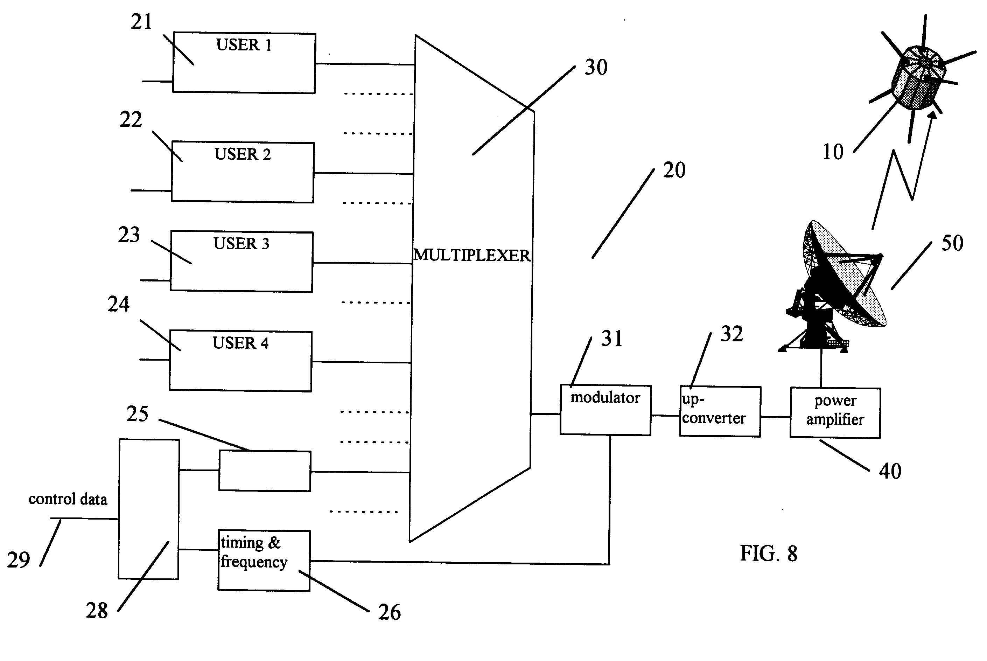

The transmitter side of a station 20 in accordance with an embodiment of the present invention is shown schematically in Fig. 8. The station 20 may be a VSAT 2-7 or a larger fixed earth station, e.g. for concentrating local traffic, or may be a mobile earth station, e.g. a vehicle mounted transceiver. At least one user 1-4 may be connected by suitable terminal equipment (e.g. fax, telephone, PC, video player) to a modulator 31 in accordance with the present invention which in turn is connected to an upconverter 32, a power amplifier 40 and an antenna 50. In accordance with the present invention the power amplifier 40 may be operated in the non-linear region, e.g. at or close to saturation. Where a plurality of users 1-4 or user terminal devices are connected to the station 20, a multiplexer 30 may multiplex the parallel data from the user terminals into a serial bit stream for supply to the modulator 31. The modulator 31 may be provided with control data 25, 26 from a processor 28, for example, synchronisation, timing, time slot and frequency information. The timing and frequency data 26 may include the selected frequency of the multiple carriers transmittable by station 20 from the total pool of "m" equally spaced carriers and optionally, the hopping sequence as well as the respective times (in a multiplexed system the time slots) at each frequency that station 20 may transmit to satellite 10. The control data may be provided at least in part from an NMC 9 either over the radio interface or via a landline 29 or other communication means. The timing data may be relative within the system 1 or may be absolute. In particular, the station 20 may receive absolute time and position information a from a global navigation system such as Navstar GPS and/or GLONASS both of which are described in the article by Prof. P. Daly, Electronics & Communication, vol. 5, number 6, December 1993. Further, in-band control data 25 may be included for transmission by station 20. Such data may include requests for changes in frequency or timing allocations or access demands as well as other information required by the system 1 for control and synchronisation purposes.

The serial multiplexed user data from the terminals 21-24 is received in the modulator 31 in which the data is suitably modulated onto one of the "m" equally spaced intermediate frequencies of the set of carrier frequencies in the OFDM signal at any one time. The modulator 31 may be a frequency agile modulator for hopping onto a preassigned sequence of the "m" equally spaced frequencies. Alternatively, but less preferred, the modulator 31 may include "m", or a subset of "m", stable oscillators and the modulated data stream is time switched to the respective oscillator by a switching means.

The modulation scheme used in the modulator scheduler 32 may be any suitable constant envelope scheme, e.g. unfiltered Quadrature Phase Shift keying (QPSK) but the invention is not limited this specific modulation scheme. Any modulation scheme which may be amplified by a power amplifier operated in the non-linear region without excessive degradation of the received and demodulated signal may be used. It is preferred if the modulation is substantially constant envelope. The modulated data stream is output from the modulator 31 is supplied to the upconverter 32 for upconversion to the RE transmission frequency (typically in the GigaHz range) and to a power amplifier 40 and transmission to satellite 10 as the final OFDM signal.

Initial insertion and synchronisation of a station 20 may be carried out using insertion/access channels which may be separated in frequency from the frequencies of the OFDM signal so that there is no channel interference. To save bandwidth, it is preferred if the VSAT's 2-7 which are not transmitting useful data are silent and do not send control dsignals, or if they do, to reduce this to a minimum. If all the VSAT's in the system which could potentially transmit a useful message continuously transmit signals, a large amount of non-productive signalling traffic is generated. Accordingly, it is preferred in accordance with the present invention if the non-transmitting stations 20 camp on the system in a synchronised state but maintaining near to radio silence, i.e. only in receive mode. The synchronising methods of the present invention may be used independently of other aspects.

One method of achieving this in accordance with the present invention is for each station to determine a common system time from a global navigation system such as Navstar GPS and/or GLONASS. Such systems broadcast a timing signal which, with other data, may be used by each station 20 to correct its own local clock. Both GLONASS and GPS guarantee an accuracy of better than 1 microsecond. This can be improved in accordance with the present invention by the NMC 9 broadcasting via satellite 10 a timing correction signal. It is preferred if each station 20 does not need to know its exact position to determine the common system time. Accordingly, each station 20 and the NMC 9 determines its "pseudo-range" to four satellites of the navigation system and computes from the data broadcast by the navigation system the instantaneous time error of its local clock thus determining a first approximation to the system time. The exact position of the hub, e.g. the NMC 9, is predetermined accurately, and the NMC 9 determines in addition the error between its calculated position in accordance with the navigation system and its known position. From this error value, the NMC 9 determines a timing correction to convert its own first approximation of a common system time to a more accurate one. The timing correction signal is also broadcast by NMC 9 to the stations 20, e.g. via satellite 10. Each station 20 corrects its first calculated approximation of the system time in accordance with this timing correction signal to obtain a better estimate of a common system time. Optionally, the calculation of the timing correction signal may be carried out by, and broadcast from satellite 10 if its position is known accurately enough. Because the time calculation errors at each station 20 are highly correlated over a wide area, the above technique allows a sufficiently improved estimation of a common system time at each station 20 that a timing accuracy much better than 1 microsecond can be achieved. Hence, in accordance with the present invention, each station 10 synchronises itself based on a broadcast timing signal which does not take up bandwidth of the main communication traffic and without requiring the stations 20 to break radio silence. This broadcast timing signal may be from a global navigation system and a part of the timing signal, e.g. a timing correction signal, may be broadcast by the hub of the network, NMC 9 or satellite 10. In addition the hub may broadcast one or more frequency signals onto which each station 20 may lock, e.g. with a phase locked loop circuit.

To synchronise the transmitted signals from each station 20 at the receiver, e.g. at satellite 10, each station 20 can use the distance from the station 20 to the receiver or preferably the time of flight between the two to determine the timing it must adopt to obtain synchronisation at the receiver (either the satellite 10 or NMC 9). This information may be provided by the network, e.g. from NMC 9 or may be calculated by PC 28 in each station 20 using appropriate algorithms and data on the current satellite position which may be provided directly from the satellite itself (ephemeris). When station 20 is mobile the calculations are complicated by the change of position of the station 20 which may be continuously recorded and input to PC 28 from information obtained from one of the global navigation systems such as GPS or GLONASS. Alternatively or additionally but less preferred as it takes up bandwidth, timing signals may be sent from the transmitter of a station 20, via the satellite 10 back to the station 20 and the round trip is halved to obtain the time delay between the station 20 and the satellite 10. The station 20 then advances its timing by this amount and sends further timing signals to the satellite 10. The satellite 10 measures any difference between the timing signals arriving from the station 20 and its own clock and sends back correction information to station 20. The station 20 then advances or retards its own timing in accordance with the correction information until its transmissions arrive at the satellite 10 synchronised with the satellite's own clock. Similar procedures may be used when NMC 9 is the receiver. It is preferred if this correction of time of flight to the receiver is not carried out continuously to maintain each station in synch but, for instance, only just before or at the start of a transmission of an OFDM user message.

In accordance with the present invention, it is preferred if each station pre-synchronises without unnecessary radio activity and then makes a final synchronisation check and small correction if necessary when starting a transmission. Once a station 20 is inserted and synchronised, maintenance of synchronisation may be achieved by in-band signalling, e.g. timing signals entered with the control data 25 which are extracted by the receiver, e.g. NMC 9 or satellite 10, by conventional techniques, and error signals broadcast back to the station 20. When such procedures as described above are carried out with all the stations 20 within the system, all data streams on each carrier may be symbol synchronised at the appropriate receiver.

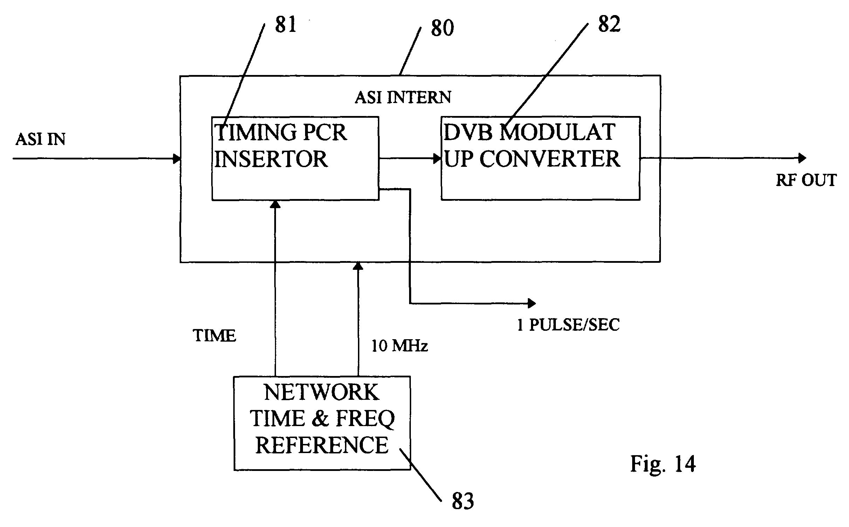

A preferred embodiment of the synchronisation procedure in accordance with the present invention will be described with reference to Fig. 14. The procedure includes pre-synchronisation in one of the insertion channels followed by inclusion into the main OFDM system. As explained above, the downlink connection to the VSAT's 2-7 may be DVB compatible. In accordance with the present invention a very accurate program clock reference (PCR) time stamp is inserted in, and broadcast with the DVB output stream. The time stamps are received by all the VSAT's. The hub or NMC also broadcasts the orbital information of the relevant satellite 10. Using its own approximate location (determined from a global navigation system or otherwise) and the broadcast satellite information and time stamps, each VSAT calculates an estimate of the common system time allowing for its position relative to the hub or NMC, the satellite distance, movements and Doppler effects. While still in the insertion channel and using this method (or the one described above using the global navigational system) each VSAT reaches a first stage of synchronisation, e.g. to within 1 microsecond. Each VSAT then transmits a timing pulse which is measured at the hub or NMC and the correction to the common system clock is broadcast back to the individual VSAT as a timing correction signal. The VSAT corrects its clock according and sends further timing pulses and receives correction signals until the required synchronisation is achieved. The VSAT is then instructed by the hub, (NMC or satellite) to move from the insertion channel to one of the frequencies or frequency/timeslot combinations of the main OFDM system. Here, the VSAT continues to send timing signals and receive correction signals at a very low rate, e.g. one per minute depending upon system loading, in order to reduce wasteful use of radio resources. This procedure has been tested and is able to maintain a remote receiver at the common system time to within a few nanoseconds.

In accordance with this embodiment, the DVB modulator 80 of the transmitter of the hub or NMC includes a timing-PCR inserter 81 for inserting stable time stamps in the DVB compliant output stream and broadcasting via the DVB modulator and upconverter 82 and an antenna. Preferably, the incoming DVB data stream is decoupled from the DVB output stream so that the time stamps can be placed accurately in the stream and any timing jitter in the incoming stream may be removed. Any existing PCR stamps may be re-stamped in PCR inserter 81. By this method, the outbound clock is controlled by the modulator 80. Decoupling may be achieved by rate adaption as is well known to the skilled person. The time stamps are provided from an accurate timing source 83 such as an atomic clock and will be typically 1 pulse per second. The demodulator of the receiver of the hub is slaved to the same clock.

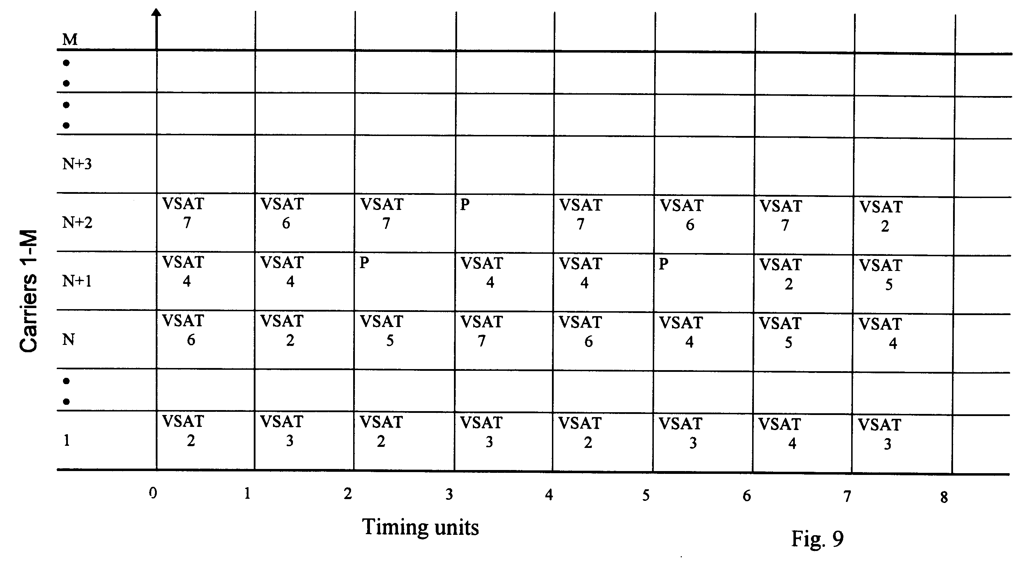

Fig. 9 is a schematic arbitrary timing and frequency plan for VSAT's 2-7 and NMC 9. For each carrier 1...n... m there is a timing plan for the transmissions by the VSAT's 2-8 and NMC 9. The time units may be relative within the system 1, e.g. the system has its own: clock, for example an atomic clock, or may be absolute as determined with reference to a standard such as a global navigation system as mentioned above. In a multiplexed system these time units may represent time slots. Additionally and optionally time may be allowed in the system 1 for transmission of control or other data to be sent on a regular or random basis in so-called pilots "P".

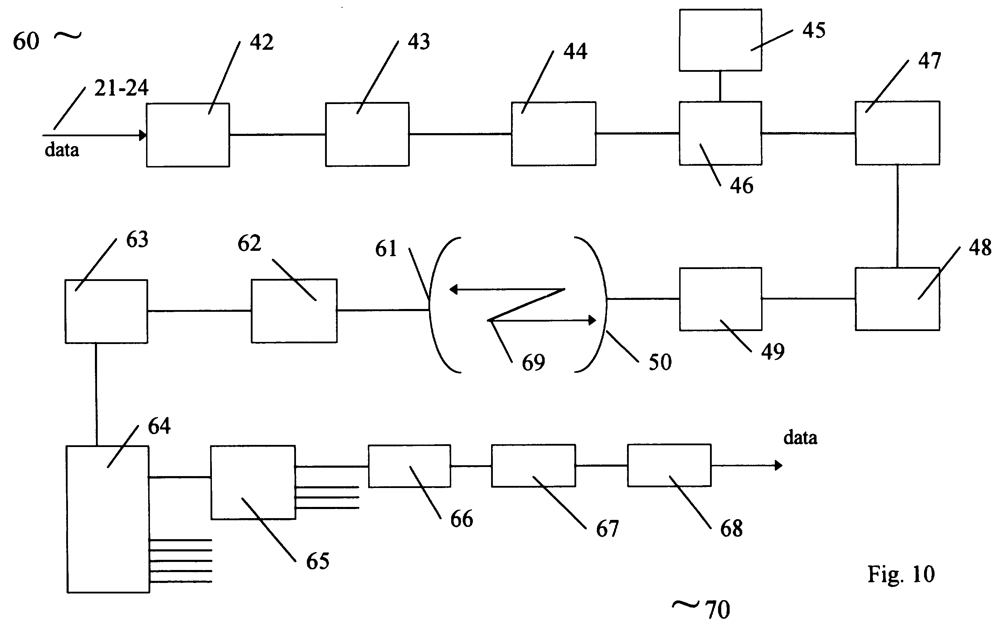

Fig. 10 is a schematic representation of an embodiment of a transmitter 60 and a receiver 70 in accordance with the present invention. In the transmitter 60, data 21-24 is fed to a substantially constant envelope frequency agile modulator 46 for modulation of one or more of the frequencies of the set of frequencies making up the OFDM signal. The transmission times and hopping frequencies are specified by the timing and frequency scheduler 45 as described with respect to Fig. 8 and only one frequency is transmitted at any one time. The timing and frequency scheduling may be supplied by the network, e.g. from the NMC 9 via the radio interface or a landline and stored in the timing and frequency scheduler 45 which may have a non-volatile memory and processing capability. The present invention includes pre-assigned, reservation, demand access and random access schemes. Data 21-24 may be multiplexed data from several terminals, e.g. fax, telephone, PC and/or include data from several users 1-4 concentrated at the transmitter 60. Optionally, the data 21 may be interleaved in an interleaver 42, error coded, e.g. trellis, block or convolution coding, in a coder 43 and scrambled and/or encrypted in a scrambler and/or encrypter 44 for security and privacy purposes before being modulated. Alter modulation the output signal of the modulator 46 may be bandwidth limited in a digital band pass filter 47 set to the bandwidth of the complete set of multicarrier frequencies (this is to avoid transmitting power in frequencies outside those required for the OFDM transmission) and the filtered signal is then upconverted to the RF transmission frequency in an upconverter 48 and amplified in a power amplifier 49 for transmission to the satellite 10 via the antenna 50 over the radio interface 69.

The data streams on the multicarrier frequencies which are transmitted by the transmitters 60 are transmitted in such a way that they are symbol synchronised at the receiver 70. The OFDM signal received by the receiver 70 is therefore made up of the transmissions from a plurality of transmitters 60, each transmission being controlled by the timing and frequency scheduler 45 in each station 60 to obtain symbol synchronisation at the receiver 70. The receiver 70 may be the satellite 10 or the NMC 9. It is preferable if the NMC 9 controls the transmitters 60 so that the received carrier densities of all the stations 60 at the receiver 70 are more or less equal.

The receiver 70 includes an antenna 61, a downconverter 63, a bandpass filter 62 to extract the combined signal of evenly spaced intermediate frequencies each carrying a data stream, and a multicarrier demodulator 64 for extraction of the individual data streams. The multicarrier demodulator may be a discrete Fourier transform demodulator using fast Fourier transforms as is conventional for OFDM or COFDM signal demodulation. Such demodulators are particularly suitable for on-board processing as they are compact, low weight, low power and relatively simple. To extract the data, a narrowband channel filter such as a SAW filter is not required in accordance with the present invention thus simplifying the receiver design.

Each recovered data stream may be de-multiplexed in a demultiplexer 65, de-scrambled and/or decrypted in a descrambler 66, decoded in a decoder 67 and de-interleaved in a deinterleaver 68 depending on how the data was processed in the transmitters 60 and how the data streams are to be processed further.

The present invention relates to the communication link from the user terminals to or through the satellite 10. The present invention improves the use of one or more of the following resources with respect to existing multi-user, multi-frequency telecommunication, in particular, satellite systems:

1) user terminal transmit power. The output amplifier of each user terminal can be operated at saturation (0dB output back-off) without any penalty in system performance; this is important since the rated CW output power of the user terminal is a major system cost driver, especially for large user community sizes.

2) satellite bandwidth. The required frequency spacing between the carriers of the user information is minimal and 1.2 to 1.5 times lower than in conventional frequency-division-multiplex (FDM) systems.

3) multi-user receiver complexity. The proposed signal spacing and shaping allow for efficient joint demodulation and detection of the simultaneous user messages This feature is especially attractive in systems where the multi-carrier receiver is located in the satellite, as is the case in on-board-processing (OBP) systems.

These advantages are obtained by applying a number of concepts in the signal design. These concepts may be one or more of the following:

1) use of a robust modulation scheme, e.g. substantially constant envelope signals: the user signals may have constant envelope so that they are not altered or degraded by transmission through a saturated output amplifier of the user terminal. All example of a suitable modulation format is unfiltered M-ary Phase Shift Keying (M-PSK). In a typical example all users will transmit in unfiltered 4-PSK, but it is very well possible to mix several modulation formats (for example 4-PSK and 8-PSK) in a single system with only a minor impact on receiver complexity.

2) symbol-synchronous transmission: the symbol rates for all user terminals are kept equal, and the symbol epochs are aligned at the multi-user receiver. Without imposing symbol-synchronism the mutual interference of user signals with a small frequency separation cannot be avoided, unless the user signals are severely filtered. Such a filtering would destroy the constant envelope property described above.

3) orthogonal signal sets allow closely spaced signals: user signals can be closely spaced in frequency at the receiver only when they are orthogonal. Usually signals are made orthogonal by separating them completely in either time or frequency (e.g. in FDM systems) In the system proposed in accordance with the present invention the user signals are not completely separated in frequency as the bandwidth of each modulated carrier may overlap with the adjacent carrier, but they are still orthogonal because of the use of symbol synchronisation. Simultaneous user signals are separated over a frequency that is nominally equal to the symbol rate (or a multiple thereof). In FDM systems user signals are conventionally separated by 1.2 to 1.5 times the symbol rate. This allows increase of the throughput of a given satellite segment by 20% to 50% with respect to traditional FDM systems. For M simultaneous users transmitting at a symbol rate 1/T the total used space segment bandwidth is M/T.

4) the received signal set matches efficient receiver algorithms: The proposed basic complex signal format is

$$s(m,k,t) = d(m,k) * \exp(j2\pi \, (fo+m/T) \, (t-kT)) \quad kT<t<(k+1)T$$

where

d(m,k)    = complex data symbol of user in frequency slot m in symbol epoch k
fo    = common base frequency for all users
m/T    = frequency offset for frequency slot m (m=0,2,...M-1)
T    = symbol period, equal for all users

The simultaneous demodulation and detection of the m data symbols in epoch k requires only an M-point discrete-Fourier-transform (DFT), for which very efficient algorithms are available. Furthermore existing digital signal processor architectures are available which are optimised to perform DFT. Multi-carrier demodulation for filtered M-PSK or irregular frequency spacings are, on the other hand, considerably more complex.

A comparison has been made between the present invention and a conventional FDM system. The system in accordance with the present invention used symbol synchronous, multi-carrier transmissions. The modulation was constant envelope QPSK-1/2-RS, whereby the carriers were located at 1 x the baud (symbol) rate. As the modulator generates a constant envelope signal, it is not important in which region the output amplifier is operated.

For the comparison a non-symbol synchronous - FDMA/TDMA system was tested. This system used a Nyquist filtered QPSK-1/2-RS scheme, whereby the carriers were located at 1.5 x the baud rate. The modulator generated a Nyquist filtered (e.g. roll-off 35%) signal. When the power amplifier is operated in its non-linear region, there are two sources of degradation:

- the demodulator receives deformed signals called "Demodulator Degradation".
- the adjacent demodulator receives the interfereing regrowth energy resulting in "Adjacent Channel Degradation".

All the transmissions were controlled, so that the received carrier densities of all stations were substantially equal. This can result in a maximum input overdrive of the power amplifier of 10 dB.

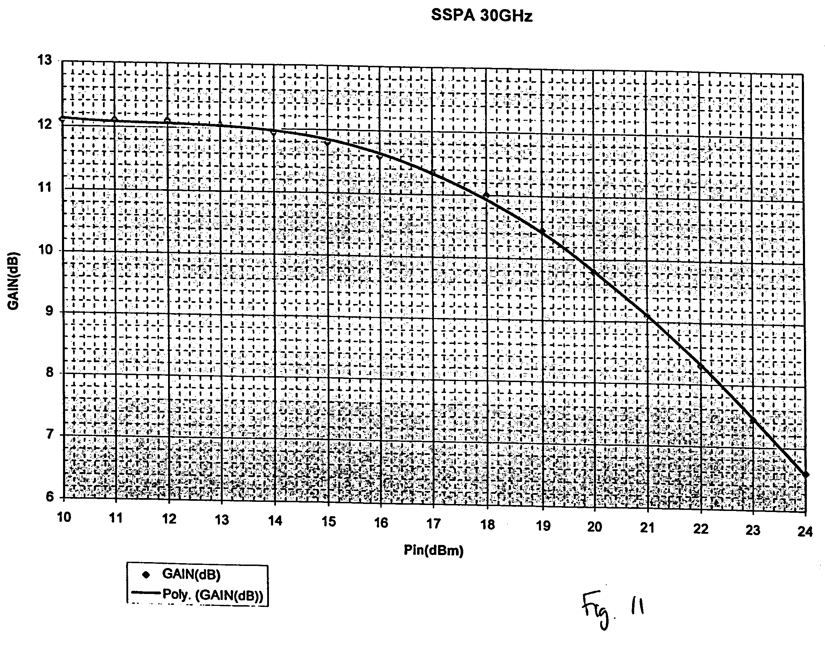

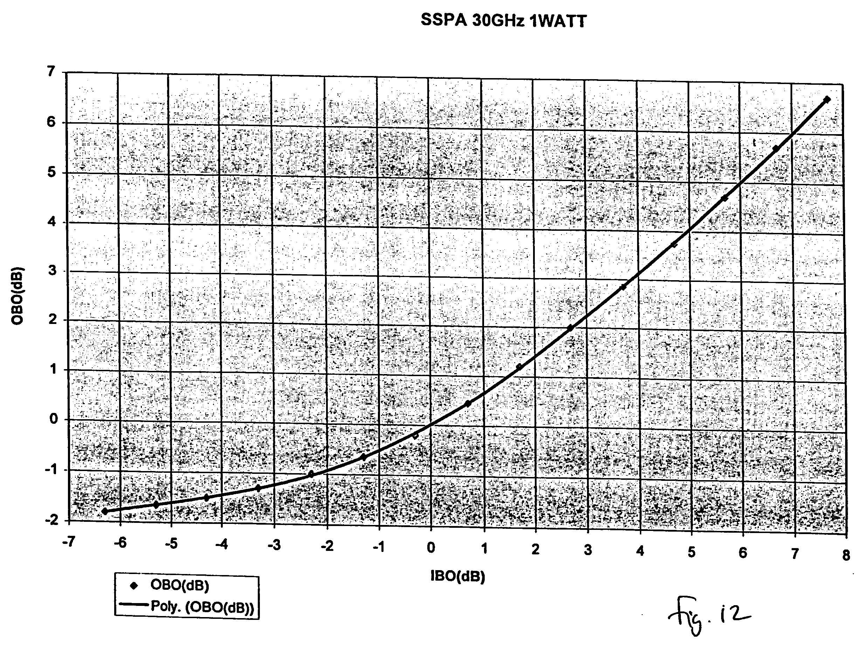

The non-linear characteristics of the tested 1 Watt solid state power amplifier (SSPA) are shown in Fig. 11. The 1 dB compression point is at +17.7 dBm (input), +28.8 dBm (output). This is considered as the reference point for definition of input (IBO) and output back-off (IBO), i.e. IBO = 0 dB corresponds to OBO = 0 dB at this point resulting in -1.2 dBW at the SSPA output. The response is shown in Fig. 12 in terms of the normalised IBO and OBO about the reference point. For an input overdrive of 6.3 dB (IBO = -6.3dB), the output overdrive is 1.8 dB (OBO =-1.8 dB). Further, the output power is not reduced, even at an overdrive of 15 dB (IBO = -15 dB). Having to operate at the 1 dB compression point means a significant reduction (1.8 dB) of the output power capability.

For the system according to the present invention, as long as the wanted signal is below the required reference level at the receiver, the NMC 9 will drive the modulator in the transmitting station higher and higher in an attempt to gain more transmitted power and may possibly place the SSPA of the transmitter in overdrive. The demodulator in the receiver will not produce a degraded received signal in this mode with the present invention because of the use of constant envelope signals. The maximum VSAT power capacity is OBO = -1.8dB corresponding to +0.6 dBW.

In comparison, the output of the transmitter amplifier in the comparison FDM system would also be driven to the maximum VSAT power capacity of OBO = -1.8 dB

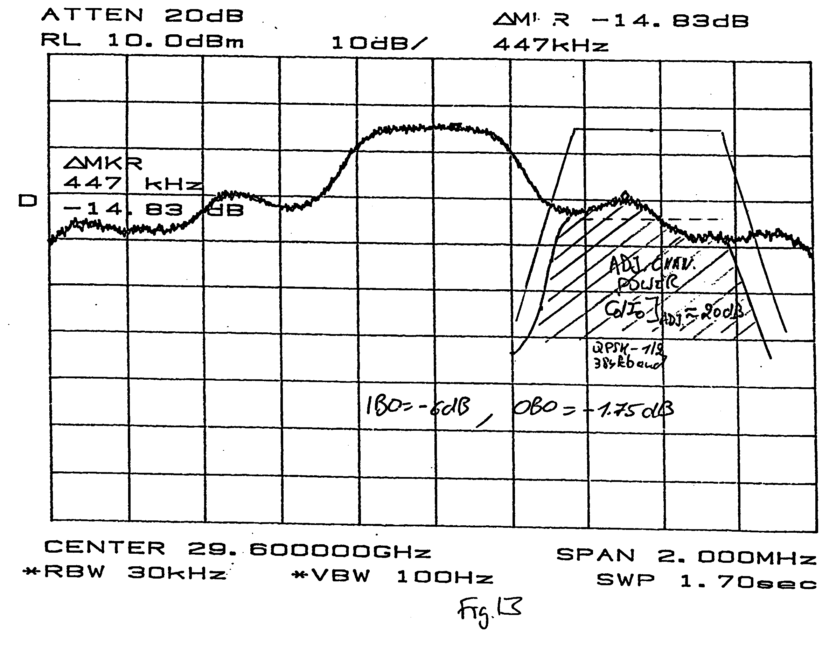

corresponding to +0.6 dBW. This will have the following negative effects. (i) It causes spectrum regrowth as shown in Fig. 13 (for an input overdrive of 6 dB). The corresponding interference into the adjacent channel (which is normally at the same or higher power density level) is on average $Co/Io \approx 20$ dB. Since the threshold link operation is at $Co/No]_{THR} \approx 4$ dB, this corresponds to a degradation of 0.11 dB for the adjacent demodulation.

(ii) The deviation from linear characteristics caused demodulator degradation, which was measured to be a maximum of 0.07 dB from the linear operation. The net result of this operation is an output power of +0.6 dBW, which is degraded by 0.07 dB.

(iii) Another degradation at saturation is the loss of energy in the regrowth part of the transmission, instead of keeping this power in the main lobe.

The lost energy $\approx$    -16dB ($1^{ste}$ lobe) 2.5%
                          -20 dB ($2^{nd}$ lobe) 1%

The net loss is then -10log (1 - 0.035) or 0.15 dB.

(iv) If it would be decided to use the VSAT amplifier up to the maximum 1 dB compression point, the output power would be limited to +0.6 - 1.8 = -1.2 dBW, without however the 0.07 dB degradation. This corresponds to a reduced link margin of 1.72 dB, which is considered as significant inefficiency in VSAT systems.

When the SSPA was in hard overdrive (OBO = -1.8 dB), the results in Table 1 were obtained showing an improvement of 1.2 dBW for the system of the present invention.

Table 1

|  | NET EQUIVALENT SIGNAL POWER |
|---|---|
| MF/TDMA - Saturated SSPA | +0.60 dBW |
| FDMA/TDMA - Saturated SSPA | +0.6 - 0.07 - 0.15 = 0.38 dBW |
| FDMA/TDMA - SSPA @ - 1 dB compression | +0.6 - 1.8 = -1.2 dBW |

While the invention has been shown and described with reference to preferred embodiments, it will be understood by those skilled in the art that various changes or modifications in form and detail may be made without departing from the scope and spirit of this invention. For instance, symbol guard gaps may be introduced. The receiver ignores the incoming signal during the guard time. The guard symbol time TG may be set at ≤ 25% of the symbol period, typically 9 to 15% thereof. The length of the guard gap should be kept as short as possible because it is a non-used part of the channel capacity and to maintain orthogonality, the spacing of the carriers has to be increased which lowers the spectral efficiency of the system.

Further, the system in accordance with the present invention is not dependent on the access scheme and may be configured, for instance, for pre-assigned, reservation, demand or random access. The only requirement is that the all transmissions whether traffic, control or access requests must be symbol and ideally packet synchronous at the receiver.

Although the present invention has been described with particular reference to satellite systems and the present invention has particular advantages in satellite systems such as the simplicity of the design of the receiver within the satellite for on-board processing as well as the simplicity of the design of the power amplifiers used in the earth stations, the present invention is not limited to satellite systems, i.e. the radio interface 69 does not need to include a satellite link. The present invention may be advantageously used wherever transmission of high speed data is required at different information rates, particularly when the transmitters and receivers are stationary, e.g. in a Metropolitan Access network or in the cable return channel of the DVB system in which the modulation rates may be 256kbits/s supporting 500 slots/s, 1,544 Mbits/s supporting 3000 slot/s or 3.088 Mbit/s supporting 6000 slots as described in the article by G. S. Mills, W. H. Dobbie and G. Bensberg, "DVB specifications for broadcast related interactive TV services", Electronics & Communication, vol. 9, number 1, February 1997, pages 38 to 42.

## Claims

1. A telecommunications system including a plurality of transmitters, each transmitter transmitting a modulated signal on one carrier of a set of equally spaced carriers at any one time, said transmitters being co-ordinated by frequency division multiplexing and synchronised to produce an orthogonal frequency division multiplex (OFDM) signal at a receiver.

2. A method of operating a telecommunication system, comprising the steps of: transmitting from each transmitter of a plurality of transmitters a modulated data stream on one carrier of a set of equally spaced carriers at any one time, co-ordinating and synchronising the transmissions of the plurality of transmitters so as to produce an orthogonal frequency multiplexed (OFDM) signal at a receiver.

3. A system according to claim 1 or method according to claim 2, wherein the synchronisation of the transmitters includes broadcasting a timing signal relating to a common system time.

4. A system or method according to claim 3, further comprising the timing signal being broadcast from a hub of the system.

5. A system or method according to any previous claim, wherein the transmissions from said transmitters are symbol synchronous, preferably packet or frame synchronous at said receiver.

6. A system or method according to any previous claim, wherein at least one transmitter is adapted to hop on at least two of the set of carriers.

7. A system or method according to any previous claim, wherein said system is a satellite system and said receiver is a satellite or an earth station.

8. A system or method according to any previous claim, wherein guard gaps are used and the gaps are set at less than 25% of the baud period, more preferably less than or equal to 15% of the baud period.

9. A transmitter for transmitting a modulated data stream on one carrier of a set of equally spaced carriers at any one time, the spacing of said carriers being at the baud rate or a multiple thereof comprising:

    a modulator for modulation of a data stream,
    a means for sequentially hopping between at least two of said carriers.

10. A transmitter according to claim 9, further comprising an output amplifier operated within a non-linear region.

11. A satellite receiver for receiving an orthogonal frequency multiplexed (OFDM) signal including a set of equally spaced carriers, each carrying a modulated data stream, the satellite receiver including a demodulator for demodulating the OFDM signal.

12. A satellite receiver according to claim 11, wherein said receiver does not include a narrowband channel filter to extract said data from said OFDM signal.

13. A telecommunications system, a method of operating a telecommunications system, a transmitter or a satellite receiver in accordance with any of the previous claims, wherein the modulation of the data stream is substantially constant envelope.

Fig. 1

Fig. 2

12

**Fig. 3**

**Fig. 4**

Fig. 5

Fig. 6

FLAT BW:21.9MHz      FLAT BW:29.2MHz      FLAT BW:38.9MHz

0 dB

-10 dB    128 carriers      64 carriers      16 carriers
      144kbps       384kbps       2048kbps

-20 dB

-30 dB

10MHz

Fig. 7

EP 0 930 744 A1

FIG. 8

EP 0 930 744 A1

EP 0 930 744 A1

**Carriers 1-M**

| Carriers | 0 | 1 | 2 | 3 | 4 | 5 | 6 | 7 | 8 |
|---|---|---|---|---|---|---|---|---|---|
| M | | | | | | | | | |
| • | | | | | | | | | |
| • | | | | | | | | | |
| • | | | | | | | | | |
| • | | | | | | | | | |
| N+3 | | | | | | | | | |
| N+2 | VSAT 7 | VSAT 6 | VSAT 7 | P | VSAT 7 | VSAT 6 | VSAT 7 | VSAT 2 | |
| N+1 | VSAT 4 | VSAT 4 | P | VSAT 4 | VSAT 4 | P | VSAT 2 | VSAT 5 | |
| N | VSAT 6 | VSAT 2 | VSAT 5 | VSAT 7 | VSAT 6 | VSAT 4 | VSAT 5 | VSAT 4 | |
| • | | | | | | | | | |
| • | | | | | | | | | |
| 1 | VSAT 2 | VSAT 3 | VSAT 2 | VSAT 3 | VSAT 2 | VSAT 3 | VSAT 4 | VSAT 3 | |

Timing units

Fig. 9

EP 0 930 744 A1

60 ~

21-24
data

42

43

44

45

46

47

48

49

50

61

62

63

64

65

66

67

68

69

data

Fig. 10

~ 70

SSPA 30GHz

Fig. 11

Fig. 12

Fig. 13

EP 0 930 744 A1

81    80    82

ASI INTERN

ASI IN →

| TIMING PCR INSERTOR | DVB MODULAT UP CONVERTER |

→ RF OUT

1 PULSE/SEC

TIME    10 MHz

| NETWORK TIME & FREQ REFERENCE |

83

Fig. 14

**European Patent Office**

**EUROPEAN SEARCH REPORT**

Application Number

EP 98 10 0018

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 641 096 A (FRANCE TELECOM; TELEDIFFUSION DE FRANCE) 1 March 1995<br>* page 2, line 1 - line 2 *<br>* page 3, line 51 - page 4, line 2 *<br>* page 4, line 6 - line 10 *<br>* page 4, line 21 - line 24 *<br>* page 9, line 2 - line 6 * | 1-5,7,8, 11,12 | H04L5/02 |
| X | WAHLQVIST ET AL.: "Time synchronisation in the uplink of an OFDM system"<br>1996 IEEE VEHICULAR TECHNOLOGY CONFERENCE, 28 April 1996 - 1 May 1996, NEW YORK, US, pages 1569-1573, XP000595795<br>* page 1569, left-hand column, paragraph 1 * | 1,2,5,7, 8,11,12 | |
| X | WO 96 24989 A (ADC TELECOMMUNICATIONS) 15 August 1996<br>* page 4, line 3 - line 4 *<br>* page 4, line 9 - line 14 *<br>* page 4, line 24 - line 27 *<br>* page 5, line 25 - line 27 *<br>* page 6, line 4 - line 9 * | 1,2,5,7, 8,11,12 | |
| X | EP 0 725 509 A (ALCATEL BELL) 7 August 1996<br>* column 2, line 16 - line 20 * | 1,2,5,7, 8,11,12 | TECHNICAL FIELDS SEARCHED (Int.Cl.6)<br><br>H04L |
| A | EP 0 562 868 A (WI LAN) 29 September 1993<br>* page 2, line 39 - line 41 *<br>* page 5, line 54 - page 6, line 4 *<br>* page 6, line 58 - line 3 * | 6,9,10 | |

-/--

The present search report has been drawn up for all claims

| Place of search | Date of completion of the search | Examiner |
|---|---|---|
| THE HAGUE | 18 June 1998 | Scriven, P |

EP 0 930 744 A1

**European Patent Office**

**EUROPEAN SEARCH REPORT**

Application Number

EP 98 10 0018

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | NILSSON: "Spectrum and waveform relations of multicarrier communications" MILCOM 1996, 21 - 24 October 1996, NEW YORK, US, pages 255-259, XP000697285 * page 255, left-hand column, paragraph 1 - paragraph 2 * | 13 | |

TECHNICAL FIELDS SEARCHED (Int.Cl.6)

The present search report has been drawn up for all claims

| Place of search | Date of completion of the search | Examiner |
|---|---|---|
| THE HAGUE | 18 June 1998 | Scriven, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

24